# EUROPEAN PATENT SPECIFICATION

(11) **EP 4 407 371 B1**
(45) Date of publication and mention of the grant of the patent: **03.12.2025**
(21) Application number: 23153460.3
(22) Date of filing: 26.01.2023
(51) Int. Cl.: G02F 1/39, G02F 1/35, G02F 1/01

(54) **METHOD AND SYSTEM FOR ALIGNMENT OF AN ENTANGLED PHOTON SOURCE**
VERFAHREN UND SYSTEM ZUR AUSRICHTUNG EINER VERSCHRÄNKTEN PHOTONENQUELLE
PROCÉDÉ ET SYSTÈME D'ALIGNEMENT D'UNE SOURCE DE PHOTONS ENCHEVÊTRÉE

(43) Date of publication of application: 31.07.2024
(73) Proprietor: Quantum Industries GmbH, 1100 Vienna (AT); Quantum Technology Laboratories GmbH, 1100 Vienna (AT)
(72) Inventor: BULLA, Lukas, 1160 Vienna (AT); ECKER, Sebastian, 1100 Vienna (AT); FINK, Matthias, 2344 Maria Enzersdorf (AT); HOCHRAINER, Armin, 1170 Vienna (AT); NEUMANN, Sebastian Philipp, 1090 Vienna (AT)
(74) Representative: Meissner Bolte Partnerschaft mbB

(56) References cited:
- EP-A1- 3 754 396
- WO-A1-2022/165134
- CN-A- 105 391 547
- CN-A- 108 984 153
- US-A- 5 136 600
- US-A1- 2018 292 728
- US-B2- 11 343 001
- SEBASTIAN ECKER ET AL: "Overcoming Noise in Entanglement Distribution", ARXIV.ORG, CORNELL UNIVERSITY LIBRARY, 201 OLIN LIBRARY CORNELL UNIVERSITY ITHACA, NY 14853, 2 April 2019 (2019-04-02), XP081543628, DOI: 10.1103/PHYSREVX.9.041042
- NATALIA HERRERA VALENCIA ET AL: "Unscrambling Entanglement through a Complex Medium", ARXIV.ORG, CORNELL UNIVERSITY LIBRARY, 201 OLIN LIBRARY CORNELL UNIVERSITY ITHACA, NY 14853, 10 October 2019 (2019-10-10), XP081513486

## Description

The present invention provides a method for alignment of an entangled photon source according to the preamble of claim 1 and a system for alignment of an entangled photon source according to the preamble of claim 11.

As of today, the most efficient method of preparing entangled photons is via spontaneous parametric down-conversion (SPDC) which occurs in highly birefringent non-linear crystals arranged in a source. In order to generate entangled photons via spontaneous parametric down-conversion (SPDC), the non-linear crystal is pumped by a pump laser. The alignment of the pump laser beam is crucial in free-space sources, since it inherits its spatial mode to the entangled photons. For that a precise alignment of the optical components for guiding the pump beam to and through the non-linear crystal is important. In addition, after initial alignment, drifts of the optical components can deteriorate over time which in known systems is countered by periodic manual alignment of the optical components.

From EP 3 754 396 A1 the alignment of an entangled photon source in a Sagnac configuration is known, by a tip/tilt movement of the two mirrors of the Sagnac loop and the detection of the interference pattern of the pump beam behind a polarizing element outside the Sagnac loop.

From Sebastian Ecker et al: "Overcoming Noise in Entanglement Distribution" arXiv.org, Cornell University Library, 201 Olin Library Cornell University Ithaca, NY 14853, https://doi.org/10.48550/arXiv.1904.01552 a system generating of energy-time entangled photons in an entangled photon source is known, describing the detection of energy-time entangled photons at the receivers in laser-stabilized unbalanced polarizing Mach-Zehnder interferometers (PMZIs).

It is an object of the present invention to provide an improved alignment and stabilization method and system for a large variety of entangled photon sources.

According to the present invention, a method for alignment and stabilization of an entangled photon source is provided according to claim 1.

This object is achieved by a method for alignment or stabilization of an entangled photon source with the steps,
i) generation of a polarized pump beam by a pump laser;
ii) generation of entangled photons by guidance of the pump beam to the non-linear element in the source via one or more alignment means.

According to the invention the method comprises the steps
iii) measurement of the pump beam after the generation of the entangled photons by spatial mode filtering of the pump beam by a spatial mode filter means and detection of the spatial mode filtered pump beam by a detection means after the generation of the entangled photons;
iv) generation of a control signal based on the spatial mode filtered pump beam in a control means; wherein the control signal is an electrical signal whose magnitude is proportional to the intensity of the spatial mode filtered and detected pump beam;
v) adjustment of the one or more alignment means by the control signal in order to align or stabilize the spatial mode of the pump beam in the source.

According to the present invention, a system for alignment or stabilization of an entangled photon source is provided according to claim 11.

The object is further achieved by a system for alignment or stabilization of an entangled photon source, comprising a pump laser generating a pump beam, a source and one or more alignment means,
- whereby the source is arranged behind the pump laser and comprises a non-linear element for the generation of entangled photons, and
- whereby the alignment means are arranged inside and/or outside of the source in order to guide the pump beam to the non-linear element after the generation of the entangled photons.

According to the invention, the system comprises a spatial mode filter means arranged behind an output port of the source of the pump beam, and
- the system comprises a detection means, arranged behind the spatial mode filter means, and
- the system comprises a control means for controlling the spatial mode of the pump beam, whereby a control loop is formed by the pump laser, the one or more alignment means as actuation means, the spatial mode filter means, the detection means and the control means.

An advantage of the inventive method and inventive system is the automated alignment and/or stabilization of the spatial mode of the pump beam in the entangled photon source leading to a stable generation of entangled photons with constant quality properties. This is realized by monitoring the pump beam after the generation of entangled photons. After the generation of the entangled photons means here, that the pump beam is first used to pump the non-linear element for the generation of the entangled photons and after that the pump beam is spatially mode filtered. The spatial mode filtering can be realized behind the source, whereby the pump beam is in that embodiment transmitted through the source. The spatial mode filtering can also be realized between the source and the pump laser, whereby in that embodiment the pump beam is reflected in the source or guided through the source back towards the pump laser. Thus, by the inventive method and the inventive system it is not necessary to measure the generated entangled photons to check and stabilize the alignment of the source and the properties of the entangled photons, but by monitoring the pump beam after the entangled photon generation. This eliminates the need to interrupt the entangled photon generation and key generation by quantum key distribution (QKD) for maintenance and adjustment purposes.

Alignment of the source or the spatial mode of the pump beam means here that the pump beam is adjusted in order to be guided towards and through the non-linear element in order to generate entangled photons and stabilization means that the spatial mode of the pump beam towards and through the non-linear element is kept stable during the generation of the entangled photons. The spatial mode of the pump laser beam through the non-linear element is crucial, since the pump beam inherits its spatial mode to the entangled photons.

In a preferred embodiment, the steps i) to v) form a control before or during the generation of the entangled photons by pumping the non-linear element by the pump beam.

In a preferred embodiment, the control comprises
a) the generation of a pump beam in step i),
b) the measurement of the pump beam in step iii) after the generation of the entangled photon pairs in step ii),
c) the generation of a control signal based on the spatial mode filtered and detected pump beam in step iv), and
d) the adjustment of the one or more alignment means by the control signal in step v).

In a preferred embodiment, the control means in step iv) compares the actual value of the spatial mode filtered pump beam with a setpoint value and the control means determines and generates the control signal on the basis of the comparison.

In a preferred embodiment, the setpoint value is set manually or is set by properties defined by a first adjustment of the entangled photon source.

In a preferred embodiment, the control loop is permanently active. The advantage of the invention is that the control loop can be permanently active while generating entangled photons. An interruption of the generation of the entangled photons for adjustment or maintenance is not necessary.

In a preferred embodiment, the control loop can be deactivated at least temporarily or periodically. In order to check the spatial mode of the pump beam, the control loop can be switched on again periodically for a certain time.

In a preferred embodiment, the spatial mode filtering in step iii) is realized by coupling the pump beam into a single mode fiber, or by one or more apertures.

In a preferred embodiment, the spatial mode filter means is a single mode fiber, or one or more apertures.

In a preferred embodiment for single mode fiber and aperture as spatial mode filter means, the detected signal is proportional to the intensity of the spatial mode overlap.

The output port of the source for the pump beam is the spatial mode beam path on which the pump beam is leaving the source. This means, that the pump beam is guided through the source for the generation of entangled photons and then leaves the source via the output port.

In a preferred embodiment, the pump beam is spatially mode filtered in the spatial mode filter means after a transmission of the pump beam through the source. In a preferred embodiment, the output port of the source for the pump beam differs to an input port of the source for the pump beam. This means the pump beam enters and leaves the source on different spatial mode beam paths. In this embodiment, the spatial mode filter means is arranged behind the output port of the source.

In a preferred embodiment, the pump beam is spatially mode filtered in the spatial mode filter means after a reflection of the pump beam in the source or a guidance back of the pump beam in the source towards the pump laser. In a preferred embodiment, the output port of the source for the pump beam is equal to an input port of the source for the pump beam. This means the pump beam enters and leaves the source on the same spatial mode beam path or the substantially same beam path. In this embodiment, the spatial mode filter means is arranged between the pump laser and the source, or branching off from the beam path of the pump beam between the pump laser and the source. The advantage is that the spatial filter means can be used for the pump beam before the generation of the entangled photon pairs, too. The branching off from the beam path of the pump beam between the pump laser and the source can be realized by a beam splitter or an isolator.

In a preferred embodiment, for the arrangement of the spatial mode filter means between the pump laser and the source the pump beam is guided in the source back to the pump laser, preferably on the same spatial mode out of the source.

This can be realized by a reflection or guidance of the pump beam in the source or a loop configuration for the pump beam in the source, preferably a Sagnac-loop configuration.

The actuation means is the part of the control loop which possesses the physical variable to be controlled and on which the control means act, preferably in step v), via the control signal. The actuation means of the inventive method and system are the one or more alignment means arranged inside or outside of the source, whereby the alignment means arranged outside of the source are arranged between the source and the pump laser. The physical variable may be for example the position of one or more mirrors, or position of one or more lenses.

In a preferred embodiment, the control signal of the spatial mode filtered pump beam is used for the alignment or stabilization of the spatial mode of the pump beam.

In a preferred embodiment, the alignment or stabilization of the spatial mode of the pump beam is realized by the control of one or more alignment means. In a preferred embodiment, the alignment means is a movable mirror, or a deformable mirror, or an aperture, or a lens, or a collimator, or a beam displacer. In a preferred embodiment, the position and/or tip-tilt alignment of one or more mirrors, or the position or tip-tilt alignment or deformation of one or more deformable mirrors, or the position of one or more apertures, or the position of one or more lenses, or one or more waveplates, or one or more birefringent elements is controlled in order to align or stabilize the spatial mode of the pump beam. In a preferred embodiment, the alignment means align or stabilize the spatial mode of the pump beam.

In a preferred embodiment, the physical variable to be controlled and on which the control means act for the mirror as alignment means is the position of the mirror or the angle of reflection of the mirror.

In a preferred embodiment, the physical variable to be controlled and on which the control means act for the alignment means as deformable mirror is the position of the deformable mirror or the angle of reflection of the deformable mirror, or the deformation of the surface of the deformable mirror.

In a preferred embodiment, the physical variable to be controlled and on which the control means act for the alignment means as aperture is the position of the aperture, or the diameter of the aperture, or the form of the aperture.

In a preferred embodiment, the physical variable to be controlled and on which the control means act for the alignment means as lens is the position of the lens, or the angle of transmission of the pump beam through the lens, or the focal length.

In a preferred embodiment, the physical variable to be controlled and on which the control means act for the alignment means as collimator is the position of the collimator, or the angle of transmission of the pump beam through the collimator, or the focal length of the collimator.

In a preferred embodiment, the physical variable to be controlled and on which the control means act for the alignment means as beam displacer is the position of the beam displacer.

In a preferred embodiment, the control means is formed as a digital controller or as an analog circuit.

In a preferred embodiment, the alignment means are one or two or more mirrors, or beam displacer, or deformable mirrors arranged in front of the source in order to adjust or stabilize the spatial mode of the pump beam on an input port of the source. The input port of the source for the pump beam is the spatial mode beam path on which the pump beam enters the source. In a preferred embodiment, the input port depends on the position of the spatial mode of the pump beam and on the angle of arrival of the spatial mode of the pump beam. In a preferred embodiment, the input port is a spatial mode in a dichroic means, or a beam splitter, or a polarizing beam splitter in the source. The dichroic means, or a beam splitter, or a polarizing beam splitter in the source can be used for example to separate the generated entangled photons after the generation from the pump beam.

In a preferred embodiment, the alignment means are one or two or more mirrors, or deformable mirrors, or beam displacers arranged in the source in order to adjust or stabilize the spatial mode of the pump beam for guidance in the source. This embodiment can be used for adjustment or stabilization of the guidance of the spatial mode of the pump beam in the source towards the non-linear element. The one or two or more mirrors arranged in the source can for example be a reflecting mirror in a source with one non-linear element pumped in two directions or the two or more mirrors forming a Sagnac-type loop, or for guidance of the pump beam to the non-linear element in a crossed crystal type source or a BBO source. For the generation of entangled photons, the position or angle of transmission of the pump beam in the non-linear element is crucial.

In a preferred embodiment, the alignment means are one or two or more lenses or deformable mirrors arranged outside or inside the source in order to adjust or stabilize the focus, or the width, or the form of the pump beam, preferably the focus, or the width, or the form of the pump beam in the non-linear element. For the generation of entangled photons, the properties of the pump beam in the non-linear element are crucial.

In a preferred embodiment, the pump laser is a continuous wave laser generating a continuous wave pump laser beam or a pulsed laser generating a pulsed pump laser beam.

In a preferred embodiment, the source is formed as a continuous wave entangled photon source or a pulsed entangled photon source.

In a preferred embodiment, the source is a Sagnac-type entangled photon source, or an entangled photon source with crossed crystals inside a Sagnac loop, or an entangled photon source using a crystal double-pass inside a Sagnac interferometer, or a crossed crystal type entangled photon source, or an entangled photon source with one non-linear element pumped in two directions, or a BBO-type entangled photon source, or a BiBO-type entangled photon source, or a beam-displacer entangled photon source, or a parallel-crystal entangled photon source, or a folded-Mach-Zehnder type entangled photon source, or an entangled photon source based on a linear displacement interferometer, or an entangled photon source using interferometers on each entangled photon individually after creation, or a rail-cross entangled photon source, or a single-crystal single-pass entangled photon source with walk-off compensation, or entangled photon sources using group-velocity-matched non-linear crystals, or entangled photon sources with multi-SPDC interference. Beside alignment means forming the particular entangled source structure, for example the Sagnac loop mirrors, each entangled photon source can be adjusted or stabilized for example by two mirrors outside the source, or a collimator, or a lens as alignment means.

In a preferred embodiment, the alignment means for a Sagnac-type source are one or more mirrors, or one or more deformable mirrors in front of the source in order to adjust or stabilize the spatial mode of the pump beam on an input port of the source, or the alignment means for a Sagnac-type source are one or more lenses in front of the source in order to adjust or stabilize the beam form or the beam size in the non-linear element, or the alignment means for a Sagnac-type source are one or more mirrors in the Sagnac loop in order to adjust or stabilize the spatial mode of the pump beam through the non-linear element.

In a preferred embodiment, the alignment means for a crossed crystal-type source or BBO-type source are one or more mirrors, or one or more deformable mirrors in front of the source in order to adjust or stabilize the spatial mode of the pump beam on an input port of the source and in order to adjust or stabilize the spatial mode of the pump beam through the non-linear element, or the alignment means for a crossed crystal-type source or BBO-type source are one or more lenses in front of the source in order to adjust or stabilize the beam form or the beam size in the non-linear element.

In a preferred embodiment, the alignment means for an entangled photon source with one non-linear element pumped in two directions are one or more mirrors, or one or more deformable mirrors in front of the source in order to adjust or stabilize the spatial mode of the pump beam on an input port of the source and in order to adjust or stabilize the spatial mode of the pump beam through the non-linear element in a first direction, or the alignment means for an entangled photon source with one non-linear element pumped in two directions are one or more mirrors or deformable mirrors in the source in order to adjust or stabilize the spatial mode of the pump beam through the non-linear element in a second direction, or the alignment means for an entangled photon source with one non-linear element pumped in two directions are one or more lenses in front of the source in order to adjust or stabilize the beam form or the beam size in the non-linear element.

In a preferred embodiment, the non-linear element is a birefringent element, preferably one or more birefringent crystal, more preferably a periodically poled birefringent crystal.

In a preferred embodiment, the transmission of the laser beam can be realized via a free-space channel or a fiber channel.

The above and other aspects, features and advantages of the present invention will become more apparent from the following detailed description when taken in conjunction with the accompanying drawings.

### Brief Description of the Drawings:

- FIG. 1:: schematic diagram of a first embodiment of the inventive system with a single mode fiber as spatial mode filter means arranged behind the source;
- FIG. 2:: schematic diagram of the embodiment of FIG. 1 with an aperture as spatial mode filter means arranged behind the source;
- FIG. 3:: schematic diagram of a second embodiment of the inventive system with a spatial mode filter means as a single mode fiber between the source and the pump laser in the beam path of the pump beam;
- FIG. 4:: schematic diagram of the embodiment of FIG. 3 with a spatial mode filter means as a single mode fiber arranged branching off from the pump beam between the source and the pump laser;
- FIG. 5:: schematic diagram of the embodiment of FIG. 1 with two mirrors and a lens as alignment means in front of the source;
- FIG. 6:: schematic diagram of the embodiment of FIG. 4 with two mirrors in the source as alignment means;
- FIG. 7:: schematic diagram of the embodiment of FIG. 4 with one mirror in the source as alignment means.

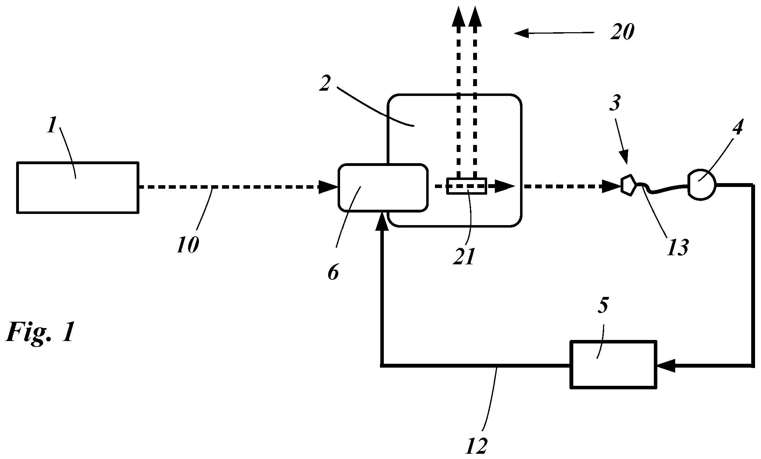

FIG. 1 shows a first embodiment of the inventive system for alignment or stabilization comprising a pump laser 1, a source 2 and one or more alignment means 6.

In the pump laser 1 a pump beam 10 is generated and guided to the source 2. In the source 2 a non-linear element 21 for the generation of entangled photons 20 is arranged. The entangled photons 20 are generated by pumping the non-linear element with the pump beam 10. The spatial mode of the pump beam 10 through the non-linear element 21 is crucial, since the pump beam 10 inherits its spatial mode to the entangled photons 20.

The guidance of the pump beam 10 in the source and the arrangement of the non-linear element 21 in the source is formed in order to generate entangled photons. This can be for example realized in a Sagnac-source configuration, or a two-direction pumped crystal configuration, or a crossed crystal configuration, or a BBO configuration.

By the schematic presentation in FIG. 1 is shown, that one or more alignment means 6 can be arranged in the system, whereby each alignment means 6 can be arranged in front of the source 2 or in the source 2. The alignment means 6 guide or form the spatial mode of the pump beam 10 to the non-linear element 21 to generate entangled photons 20.

The inventive system comprises further a spatial mode filter means 3 arranged in the embodiment of FIG. 1 behind the source and formed in the embodiment of FIG. 1 by a single mode fiber 13. Behind the source 2 means here, that the pump beam is first used for the generation of the entangled photons, and after that guided out of the source 2 towards the spatial mode filter means 3.

The pump beam 10 is spatially mode filtered by the spatial mode filter means 3 and then detected by a detection means 4. Thus, a detection signal by the detection means 4 is proportional to the coupling of the spatial mode of the pump beam 10 into the single mode fiber 13. The detection means 4 can be coupled to the single mode fiber 13 as shown in FIG. 1 or the spatially filtered pump beam 11 (not shown in FIG. 1) is detected by the detection means 4 behind the single mode fiber 13.

The inventive system of FIG. 1 also comprises a control means 5, which receives a detection signal of the detection means 4. In the control means 5 a control signal is generated and sent to the one or more alignment means 6 in order to align or stabilize the spatial mode of the pump beam 10, and thus align or stabilize the source 2 for the generation of entangled photons 20. A control loop is formed by the pump laser 1, the one or more alignment means 6 as actuation means, the spatial mode filter means 3, the detection means 4 and the control means 5.

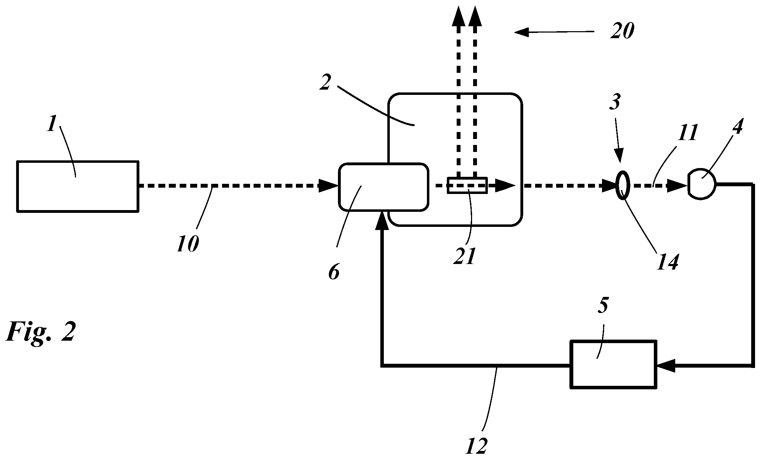

FIG. 2 shows another embodiment of the inventive system of FIG. 1, whereby FIG. 2 differs from FIG. 1 only in that the spatial mode filter means 3 is formed as an aperture 14, whereby a spatially filtered pump beam 11 is detected by the detection means 4.

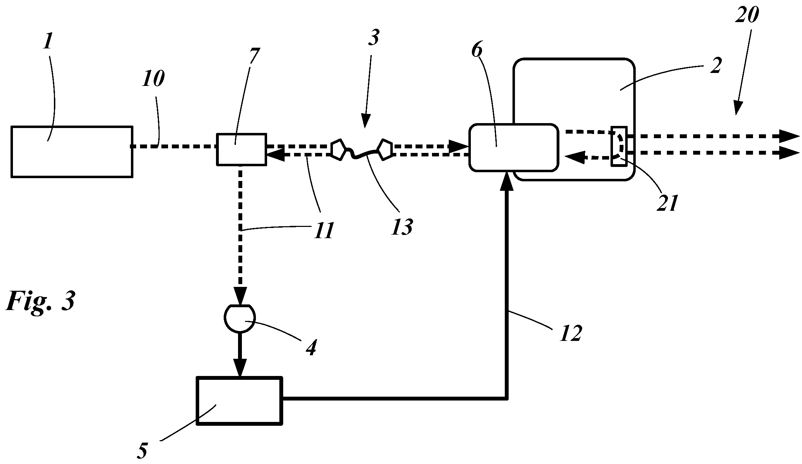

FIG. 3 shows a second embodiment of the inventive system for alignment or stabilization comprising the pump laser 1, the source 2 and one or more alignment means 6 arranged in front or in the source 2.

In the embodiment of FIG. 3 the spatial mode filter means 3 is arranged between the pump laser 1 and the source 2. For that, the pump beam 10 is reflected or guided back inside of the source 2 towards the pump laser 1. This means the pump beam 10 enters and leaves the source 2 on the same spatial mode beam path or the substantially same spatial mode beam path. The pump beam 10 is then guided to the spatial mode filter means 3 formed in the embodiment of FIG. 3 by a single mode fiber 13, spatially filtered and then reflected on a beam splitter 7 in order to detect the spatially filtered pump beam 11 in the detection means 4. Instead of a beam splitter 7 also an isolator can be used.

In the embodiment of FIG. 3 the spatially filtered pump beam 11 as well as the pump beam 10 is transmitted through the single mode fiber 13. In this embodiment, the single mode fiber 13 is used as a cleaning device for the pump beam 10 before the entangled photon generation and in addition as a spatial mode filter for the pump beam 10 after the entangled photon generation.

As the inventive system of FIG. 1 the inventive system of FIG. 3 also comprises a control means 5, which receives the detection signal of the detection means 4. In the control means 5 the control signal is generated and sent to the one or more alignment means 6 in order to align or stabilize the spatial mode of the pump beam 10, and thus align or stabilize the source 2 for the generation of entangled photons 20. A control loop is formed by the pump laser 1, the one or more alignment means 6 as actuation means, the spatial mode filter means 3, the detection means 4 and the control means 5.

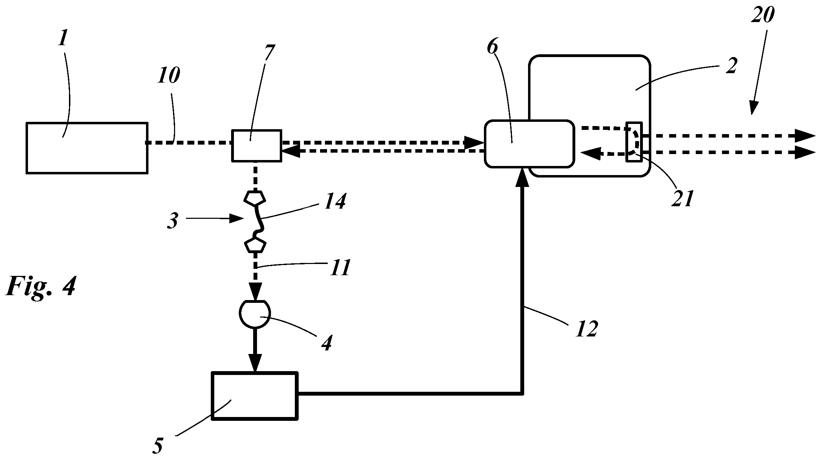

FIG. 4 shows another embodiment of the inventive system of FIG. 3, whereby FIG. 4 differs from FIG. 3 only in that the spatial mode filter means 3 is arranged behind the beam splitter 7 output in order to branch off from the pump beam 10 between the source 2 and the pump laser 1. Instead of a beam splitter 7 also an isolator can be used.

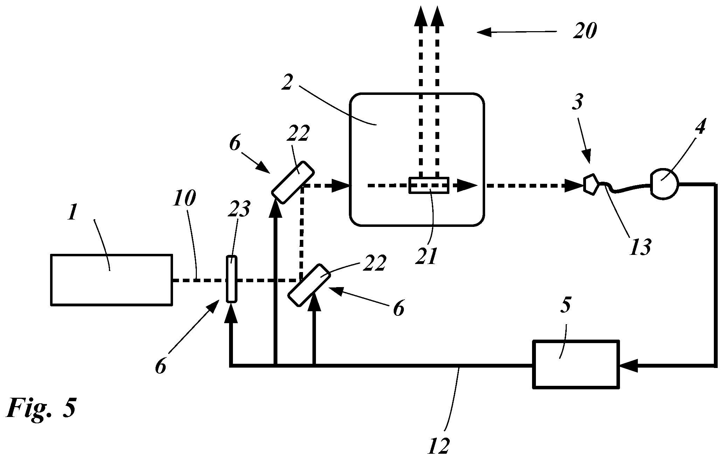

FIG. 5 shows another embodiment of the inventive system of FIG. 1, whereby FIG. 5 differs from FIG. 1 only in that as an example multiple alignment means 6 are arranged in front of the source 2. In this embodiment, the alignment means 6 are two mirrors 22 in order to align or adjust the spatial mode of the pump beam 10 by guidance to the source 2. An additional alignment means 6 is arranged between the pump laser 1 and the source 2 formed as a lens 23 in order to align or adjust the spatial mode of the pump beam 10 by beam shaping or focusing of the pump beam 10 in the non-linear element 21.

In the embodiment of FIG. 5, the tip-tilt-adjustment or the position of the mirrors 22 and the position or the focal length or the focal form of the lens 23 are controlled for the alignment or stabilization of the spatial mode of the pump beam 10.

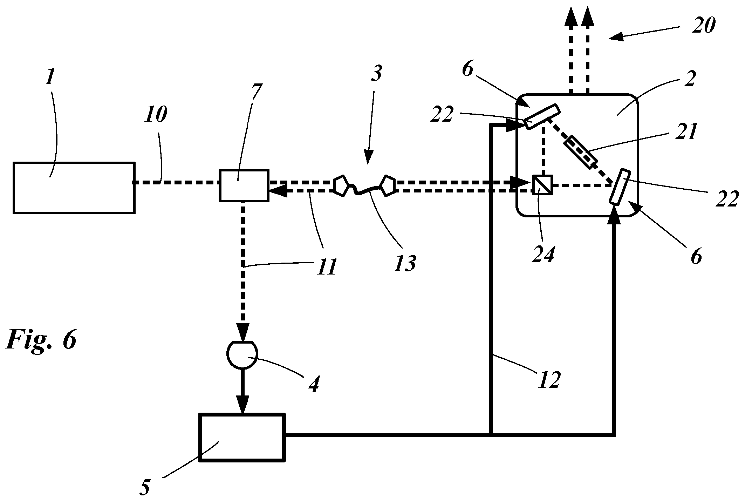

FIG. 6 shows another embodiment of the inventive system of FIG. 3, whereby FIG. 6 differs from FIG. 3 only in that as an example multiple alignment means 6 are arranged in the source 2. In this embodiment, the alignment means 6 are two mirrors 22 forming a Sagnac-loop with a polarizing beam splitter 24 and the non-linear element 21 for a Sagnac type source. In the embodiment of FIG. 6, the tip-tilt-adjustment or the position of the mirrors 22 are controlled for the alignment or stabilization of the spatial mode of the pump beam 10. The output of the entangled photons 20 in FIG. 6 is only schematically depicted.

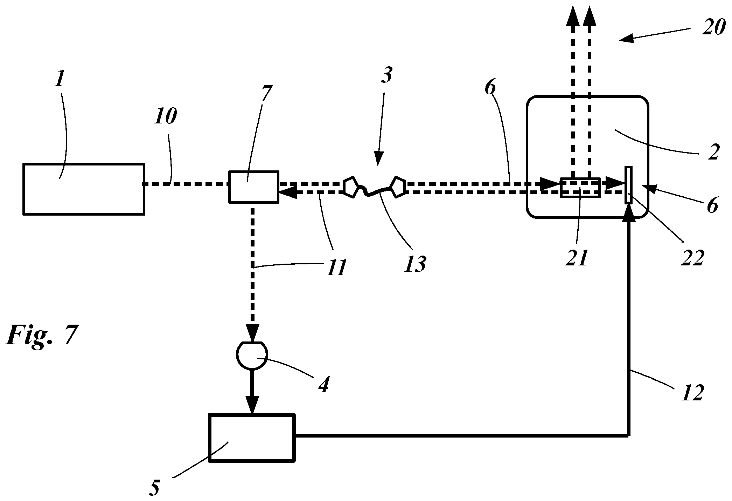

FIG. 7 shows another embodiment of the inventive system of FIG. 3, whereby FIG. 7 differs from FIG. 3 only in that as an example one alignment means 6 is arranged in the source 2. In this embodiment, the alignment means 6 is the mirror 22 behind the non-linear element 21, forming together with the non-linear element 21 a two-direction pumped crystal source 2. In the embodiment of FIG. 7, the tip-tilt-adjustment or the position of the mirror 22 is controlled for the alignment or stabilization of the spatial mode of the pump beam 10 in the second transmission direction.

It is clear, that the different spatial mode filter means 3 from FIG. 2 also can be used in the embodiment of FIG. 5. Also, it is clear, that the embodiments of the alignment means 6 of the FIG. 5, 6 and 7 can be combined in any way.

### Reference signs:

- 1: pump laser
- 2: source
- 3: spatial mode filter means
- 4: detection means
- 5: control means
- 6: alignment means
- 7: beam splitter

- 10: pump beam
- 11: spatial filtered pump beam
- 12: control signal

- 13: single mode fiber
- 14: aperture

- 20: entangled photons
- 21: non-linear element
- 22: mirror
- 23: lens
- 24: polarizing beam splitter

## Claims

1. Method for alignment of an entangled photon source (2) with the steps,
i) generation of a polarized pump beam (10) by a pump laser (1);
ii) generation of entangled photons (20) by guidance of the pump beam (10) to a non-linear element (21) in the source (2) via one or more alignment means;
**characterized in**
iii) measurement of the pump beam (10) after the generation of the entangled photons (20) by spatial mode filtering of the pump beam (10) by a spatial mode filter means (3) and detection of the spatial mode filtered pump beam (11) by a detection means (4) after the generation of the entangled photons (20);
iv) generation of a control signal (12) based on the spatial mode filtered pump beam (11) in a control means (5), wherein the control signal (12) is an electrical signal whose magnitude is proportional to the intensity of the spatial mode filtered and detected pump beam (11);
v) adjustment of the one or more alignment means by the control signal (12) in order to align the spatial mode of the pump beam (10) in the source (2).

2. Method according to claim 1
**characterized in that**
the steps i) to v) form a control before or during the generation of the entangled photons (20) by pumping the non-linear element (21) by the pump beam (10).

3. Method according to one of the claims 1 or 2,
**characterized in that**
the control comprises:
a) the generation of a pump beam (10) in step i),
b) the measurement of the pump beam (10) in step iii) after the generation of the entangled photon pairs in step ii),
c) the generation of a control signal (12) based on the spatial mode filtered and detected pump beam (11) in step iv), and
d) the adjustment of the one or more alignment means by the control signal (12) in step v).

4. Method according to one of the claims 1 to 3,
**characterized in that**
the control means (5) in step iv) compares the actual value of the spatial mode filtered pump beam (11) with a setpoint value and the control means (5) determines and generates the control signal (12) on the basis of the comparison.

5. Method according to one of the claims 1 to 4,
**characterized in that**
the spatial mode filtering in step iii) is realized by coupling the pump beam (10) into a single mode fiber (13), or by one or more apertures (14).

6. Method according to one of the claims 1 to 5,
**characterized in that**
the detected signal of the spatial mode filtered pump beam (11) is proportional to the intensity of the spatial mode overlap.

7. Method according to one of the claims 1 to 6,
**characterized in that**
the pump beam (10) is spatially mode filtered in the spatial mode filter means (3) after a transmission of the pump beam (10) through the source (2).

8. Method according to one of the claims 1 to 7,
**characterized in that**
the pump beam (10) is spatially mode filtered in the spatial mode filter means (3) after a reflection of the pump beam (10) in the source (2) or a guidance back of the pump beam (10) in the source (2) towards the pump laser (1).

9. Method according to one of the claims 1 to 8,
**characterized in that**
the position or tip-tilt alignment of one or more mirrors (22), or
the position or tip-tilt alignment or deformation of one or more deformable mirrors, or
the position of one or more apertures, or
the position of one or more lenses (23), or one or more waveplates, or one or more birefringent elements is controlled in order to align the spatial mode of the pump beam (10).

10. Method according to one of the claims 1 to 9,
**characterized in that**
- the physical variable to be controlled and on which the control means (5) act for the mirror (22) as alignment means is the position of the mirror (22) or the angle of reflection of the mirror (22), or
- the physical variable to be controlled and on which the control means (5) act for the alignment means as deformable mirror is the position of the deformable mirror or the angle of reflection of the deformable mirror, or the deformation of the surface of the deformable mirror, or
- the physical variable to be controlled and on which the control means (5) act for the alignment means as aperture (14) is the position of the aperture (14), or the diameter of the aperture (14), or the form of the aperture (14), or
- the physical variable to be controlled and on which the control means (5) act for the alignment means as lens (23) is the position of the lens (23), or the angle of transmission of the pump beam (10) through the lens (23), or the focal length, or
- the physical variable to be controlled and on which the control means (5) act for the alignment means as collimator is the position of the collimator, or the angle of transmission of the pump beam (10) through the collimator, or the focal length of the collimator, or
- the physical variable to be controlled and on which the control means (5) act for the alignment means as beam displacer is the position of the beam displacer.

11. System for alignment of an entangled photon source (2), comprising a pump laser (1) generating a pump beam (10), a source (2) and one or more alignment means,
whereby the source (2) is arranged behind the pump laser (1) and comprises a non-linear element (21) for the generation of entangled photons (20), and
whereby the alignment means are arranged inside or outside of the source (2) in order to guide the pump beam (10) to the non-linear element (21) after the generation of the entangled photons (20),
**characterized in that**
- the system comprises a spatial mode filter means (3) arranged behind an output port of the source (2) of the pump beam (10), and
- the system comprises a detection means (4), arranged behind the spatial mode filter means (3), and
- the system comprises a control means (5) for controlling the spatial mode of the pump beam (10), whereby a control loop is formed by the pump laser (1), the one or more alignment means as actuation means, the spatial mode filter means (3), the detection means (4) and the control means (5).

12. System according to claim 11,
**characterized in that**
the alignment means is a movable mirror (22), or a deformable mirror, or an aperture (14), or a lens (23), or a collimator, or a beam displacer.

13. System according to claim 11 or 12,
**characterized in that**
the spatial mode filter means (3) is a single mode fiber (13) or one or more apertures (14).

## Patentansprüche

1. Verfahren zur Ausrichtung einer verschränkten Photonenquelle (2) mit den Schritten
i) Erzeugung eines polarisierten Pumpstrahls (10) durch einen Pumplaser (1);
ii) Erzeugung von verschränkten Photonen (20) durch Leiten des Pumpstrahls (10) zu einem nichtlinearen Element (21) in der Quelle (2) über ein oder mehrere Ausrichtungsmittel;
**gekennzeichnet durch**
iii) Messung des Pumpstrahls (10) nach der Erzeugung der verschränkten Photonen (20) durch räumliche Modenfilterung des Pumpstrahls (10) durch ein räumliches Modenfiltermittel (3) und Erfassung des räumlich modengefilterten Pumpstrahls (11) durch ein Erfassungsmittel (4) nach der Erzeugung der verschränkten Photonen (20);
iv) Erzeugung eines Steuersignals (12) auf der Grundlage des räumlich modengefilterten Pumpstrahls (11) in einer Steuereinrichtung (5), wobei das Steuersignal (12) ein elektrisches Signal ist, dessen Größe proportional zur Intensität des räumlich modengefilterten und erfassten Pumpstrahls (11) ist;
v) Einstellung des einen oder der mehreren Ausrichtungsmittel durch das Steuersignal (12), um den Raummodus des Pumpstrahls (10) in der Quelle (2) auszurichten.

2. Verfahren nach Anspruch 1,
**dadurch gekennzeichnet, dass**
die Schritte i) bis v) eine Steuerung vor oder während der Erzeugung der verschränkten Photonen (20) durch Pumpen des nichtlinearen Elements (21) durch den Pumpstrahl (10) bilden.

3. Verfahren nach einem der Ansprüche 1 oder 2,
**dadurch gekennzeichnet, dass**
die Steuerung Folgendes aufweist:
a) die Erzeugung eines Pumpstrahls (10) in Schritt i),
b) die Messung des Pumpstrahls (10) in Schritt iii) nach der Erzeugung der verschränkten Photonenpaare in Schritt ii),
c) die Erzeugung eines Steuersignals (12) auf der Grundlage des räumlich modengefilterten und erfassten Pumpstrahls (11) in Schritt iv) und
d) die Einstellung des einen oder der mehreren Ausrichtungsmittel durch das Steuersignal (12) in Schritt v).

4. Verfahren nach einem der Ansprüche 1 bis 3,
**dadurch gekennzeichnet, dass**
die Steuereinrichtung (5) in Schritt iv) den Istwert des räumlich modengefilterten Pumpstrahls (11) mit einem Sollwert vergleicht und die Steuereinrichtung (5) auf der Grundlage des Vergleichs das Steuersignal (12) ermittelt und erzeugt.

5. Verfahren nach einem der Ansprüche 1 bis 4,
**dadurch gekennzeichnet, dass**
die räumliche Modenfilterung in Schritt iii) durch Einkoppeln des Pumpstrahls (10) in eine Einmodenfaser (13) oder durch eine oder mehrere Blenden (14) realisiert wird.

6. Verfahren nach einem der Ansprüche 1 bis 5,
**dadurch gekennzeichnet, dass**
das erfasste Signal des räumlich modengefilterten Pumpstrahls (11) proportional zur Intensität der räumlichen Modenüberlappung ist.

7. Verfahren nach einem der Ansprüche 1 bis 6,
**dadurch gekennzeichnet, dass**
der Pumpstrahl (10) nach einer Übertragung des Pumpstrahls (10) durch die Quelle (2) in dem räumlichen Modenfiltermittel (3) raummodengefiltert wird.

8. Verfahren nach einem der Ansprüche 1 bis 7,
**dadurch gekennzeichnet, dass**
der Pumpstrahl (10) in dem räumlichen Modenfiltermittel (3) nach einer Reflexion des Pumpstrahls (10) in der Quelle (2) oder einer Rückführung des Pumpstrahls (10) in der Quelle (2) zum Pumplaser (1) räumlich modengefiltert wird.

9. Verfahren nach einem der Ansprüche 1 bis 8,
**dadurch gekennzeichnet, dass**
die Position oder die Tip-Tilt-Ausrichtung eines oder mehrerer Spiegel (22), oder
die Position oder die Tip-Tilt-Ausrichtung oder Verformung eines oder mehrerer verformbarer Spiegel, oder
die Position einer oder mehrerer Blenden, oder
die Position einer oder mehrerer Linsen (23), oder einer oder mehrerer Wellenplatten, oder eines oder mehrerer doppelbrechender Elemente gesteuert wird, um den Raummodus des Pumpstrahls (10) auszurichten.

10. Verfahren nach einem der Ansprüche 1 bis 9,
**dadurch gekennzeichnet, dass**
- die zu steuernde physikalische Größe, auf die die Steuereinrichtung (5) für den Spiegel (22) als Ausrichtungsmittel einwirkt, die Position des Spiegels (22) oder der Reflexionswinkel des Spiegels (22) ist, oder
- die zu steuernde physikalische Größe, auf die die Steuereinrichtung (5) für das Ausrichtungsmittel als verformbarer Spiegel einwirkt, die Position des verformbaren Spiegels oder der Reflexionswinkel des verformbaren Spiegels oder die Verformung der Oberfläche des verformbaren Spiegels ist, oder
- die zu steuernde physikalische Größe, auf die die Steuereinrichtung (5) für das Ausrichtungsmittel als Blende (14) einwirkt, die Position der Blende (14) oder der Durchmesser der Blende (14) oder die Form der Blende (14) ist oder
- die zu steuernde physikalische Größe, auf die die Steuereinrichtung (5) für das Ausrichtungsmittel als Linse (23) einwirkt, die Position der Linse (23) oder der Übertragungswinkel des Pumpstrahls (10) durch die Linse (23) oder die Brennweite ist, oder
- die zu steuernde physikalische Größe, auf die die Steuereinrichtung (5) für das Ausrichtungsmittel als Kollimator einwirkt, die Position des Kollimators oder der Übertragungswinkel des Pumpstrahls (10) durch den Kollimator oder die Brennweite des Kollimators ist, oder
- die zu steuernde physikalische Größe, auf die die Steuereinrichtung (5) für das Ausrichtungsmittel als Strahlverschieber einwirkt, die Position des Strahlverschiebers ist.

11. System zur Ausrichtung einer verschränkten Photonenquelle (2), welches einen Pumplaser (1), der einen Pumpstrahl (10) erzeugt, eine Quelle (2) und ein oder mehrere Ausrichtungsmittel aufweist,
wobei die Quelle (2) hinter dem Pumplaser (1) angeordnet ist und ein nichtlineares Element (21) zur Erzeugung von verschränkten Photonen (20) aufweist, und
wobei das Ausrichtungsmittel innerhalb oder außerhalb der Quelle (2) angeordnet ist, um den Pumpstrahl (10) nach der Erzeugung der verschränkten Photonen (20) zum nichtlinearen Element (21) zu leiten,
**dadurch gekennzeichnet, dass**
- das System ein räumliches Modenfiltermittel (3) aufweist, das hinter einer Ausgangsöffnung der Quelle (2) des Pumpstrahls (10) angeordnet ist, und
- das System ein Erfassungsmittel (4) aufweist, das hinter dem räumlichen Modenfiltermittel (3) angeordnet ist, und
- das System eine Steuereinrichtung (5) zum Steuern des Raummodus des Pumpstrahls (10) aufweist, wobei eine Steuerschleife durch den Pumplaser (1), die eine oder mehreren Ausrichtungsmittel als Betätigungseinrichtungen, das räumliche Modenfiltermittel (3), das Erfassungsmittel (4) und die Steuereinrichtung (5) gebildet wird.

12. System nach Anspruch 11,
**dadurch gekennzeichnet, dass**
das Ausrichtungsmittel ein beweglicher Spiegel (22) oder ein verformbarer Spiegel oder eine Blende (14) oder eine Linse (23) oder ein Kollimator oder ein Strahlverschieber ist.

13. System nach Anspruch 11 oder 12,
**dadurch gekennzeichnet, dass**
das räumliche Modenfiltermittel (3) eine Einmodenfaser (13) oder eine oder mehrere Blenden (14) ist.

## Revendications

1. Procédé d'alignement d'une source de photons enchevêtrés (2), comprenant les étapes consistant à :
i) générer un faisceau de pompage polarisé (10) via un laser de pompage (1) ;
ii) générer des photons enchevêtrés (20) en guidant le faisceau de pompage (10) jusqu'à un élément non linéaire (21) dans la source (2) via un ou plusieurs moyens d'alignement ;
**caractérisé par** les étapes consistant à :
iii) mesurer le faisceau de pompage (10) après la génération des photons enchevêtrés (20) en filtrant par mode spatial le faisceau de pompage (10) via un moyen de filtrage par mode spatial (3), et détecter le faisceau de pompage filtré par mode spatial (11) via un moyen de détection (4) après la génération des photons enchevêtrés (20) ;
iv) générer un signal de commande (12) sur la base du faisceau de pompage filtré par mode spatial (11) dans un moyen de commande (5), le signal de commande (12) étant un signal électrique dont une amplitude est proportionnelle à l'intensité du faisceau de pompage détecté et filtré par mode spatial (11) ;
v) ajuster lesdits un ou plusieurs moyens d'alignement via le signal de commande (12) afin d'aligner le mode spatial du faisceau de pompage (10) dans la source (2).

2. Procédé selon la revendication 1,
**caractérisé en ce que**
les étapes i) à v) forment une commande avant ou pendant la génération des photons enchevêtrés (20) en pompant l'élément non linéaire (21) via le faisceau de pompage (10).

3. Procédé selon l'une des revendications 1 ou 2,
**caractérisé en ce que**
la commande comprend :
a) la génération d'un faisceau de pompage (10) dans l'étape 1),
b) le mesurage du faisceau de pompage (10) dans l'étape iii) après la génération de la paire de photons enchevêtrés dans l'étape ii),
c) la génération d'un signal de commande (12) sur la base du faisceau de pompage détecté et filtré par mode spatial (11) dans l'étape iv), et
d) l'ajustement desdits un ou plusieurs moyens d'alignement via le signal de commande (12) dans l'étape v).

4. Procédé selon l'une des revendications 1 à 3,
**caractérisé en ce que**
le moyen de commande (5) dans l'étape iv) compare la valeur réelle du faisceau de pompage filtré par mode spatial (11) à une valeur de consigne, et le moyen de commande (5) détermine et génère le signal de commande (12) sur la base de la comparaison.

5. Procédé selon l'une des revendications 1 à 4,
**caractérisé en ce que**
le filtrage par mode spatial dans l'étape iii) est réalisé en couplant le faisceau de pompage (10) jusque dans une fibre monomode (13), ou via une ou plusieurs ouvertures (14).

6. Procédé selon l'une des revendications 1 à 5,
**caractérisé en ce que**
le signal détecté du faisceau de pompage filtré par mode spatial (11) est proportionnel à l'intensité du chevauchement de mode spatial.

7. Procédé selon l'une des revendications 1 à 6,
**caractérisé en ce que**
le faisceau de pompage (10) est filtré par mode spatial dans le moyen de filtrage par mode spatial (3) après une transmission du faisceau de pompage (10) à travers la source (2).

8. Procédé selon l'une des revendications 1 à 7,
**caractérisé en ce que**
le faisceau de pompage (10) est filtré par mode spatial dans le moyen de filtrage par mode spatial (3) après une réflexion du faisceau de pompage (10) dans la source (2) ou un guidage retour du faisceau de pompage (10) dans la source (2) vers le laser de pompage (1).

9. Procédé selon l'une des revendications 1 à 8,
**caractérisé en ce que**
la position ou l'alignement de type « tip-tilt » d'un ou de plusieurs miroirs (22), ou
la position ou l'alignement de type « tip-tilt » ou la déformation d'un ou de plusieurs miroirs déformables, ou
la position d'une ou de plusieurs ouvertures, ou
la position d'une ou de plusieurs lentilles (23), ou d'une ou de plusieurs plaques à ondes, ou d'une ou de plusieurs éléments biréfringents sont commandés afin d'aligner le mode spatial du faisceau de pompage (10).

10. Procédé selon l'une des revendications 1 à 9,
**caractérisé en ce que**
- la variable physique devant être commandée et sur laquelle le moyen de commande (5) agit pour le miroir (22) en tant que moyen d'alignement est la position du miroir (22) ou l'angle de réflexion du miroir (22), ou
- la variable physique devant être commandée et sur laquelle le moyen de commande (5) agit pour le moyen d'alignement en tant que miroir déformable est la position du miroir déformable ou l'angle de réflexion du miroir déformable, ou la déformation de la surface du miroir déformable, ou
- la variable physique devant être commandée et sur laquelle le moyen de commande (5) agit pour le moyen d'alignement en tant qu'ouverture (14) est la position de l'ouverture (14), ou le diamètre de l'ouverture (14), ou la forme de l'ouverture (14), ou
- la variable physique devant être commandée et sur laquelle le moyen de commande (5) agit pour le moyen d'alignement en tant que lentille (23) est la position de la lentille (23), ou l'angle de transmission du faisceau de pompage (10) à travers la lentille (23), ou la longueur focale, ou
- la variable physique devant être commandée et sur laquelle le moyen de commande (5) agit pour le moyen d'alignement en tant que collimateur est la position du collimateur, ou l'angle de transmission du faisceau de pompage (10) à travers le collimateur, ou la longueur focale du collimateur, ou
- la variable physique devant être commandée et sur laquelle le moyen de commande (5) agit pour le moyen d'alignement en tant que déplaceur de faisceau est la position du déplaceur de faisceau.

11. Système d'alignement d'une source de photons enchevêtrés (2), comprenant un laser de pompage (1) qui génère un faisceau de pompage (10), une source (2) et un ou plusieurs moyens d'alignement,
la source (2) étant agencée derrière le laser de pompage (1) et comprenant un élément non linéaire (21) pour la génération de photons enchevêtrés (20), et
le moyen d'alignement étant agencé à l'intérieur ou à l'extérieur de la source (2) afin de guider le faisceau de pompage (10) jusqu'à l'élément non linéaire (21) après la génération des photons enchevêtrés (20),
**caractérisé en ce que**
- le système comprend un moyen de filtrage par mode spatial (3) agencé derrière un orifice de sortie de la source (2) du faisceau de pompage (10), et
- le système comprend un moyen de détection (4), agencé derrière le moyen de filtrage par mode spatial (3), et
- le système comprend un moyen de commande (5) destiné à commander le mode spatial du faisceau de pompage (10), une boucle de commande étant formée par le laser de pompage (1), lesdits un ou plusieurs moyens d'alignement en tant que moyens d'actionnement, le moyen de filtrage par mode spatial (3), le moyen de détection (4), et le moyen de commande (5).

12. Système selon la revendication 11,
**caractérisé en ce que**
le moyen d'alignement est un miroir mobile (22), ou un miroir déformable, ou une ouverture (14), ou une lentille (23), un collimateur, ou un déplaceur de faisceau.

13. Système selon la revendication 11 ou 12,
**caractérisé en ce que**
le moyen de filtrage par mode spatial (3) est une fibre monomode (13) ou une ou plusieurs ouvertures (14).
